# EUROPÄISCHE PATENTSCHRIFT

(11) **EP 1 592 595 B1**
(45) Veröffentlichungstag und Bekanntmachung des Hinweises auf die Patenterteilung: **07.06.2006**
(21) Anmeldenummer: 04710794.1
(22) Anmeldetag: 13.02.2004
(51) Int. Cl.: B61L 23/00, G01G 19/04, B61K 9/00

(54) **MESSSTRECKE ZUR ERFASSUNG UNTERSCHIEDLICHER PHYSIKALISCHER GRÖSSEN SCHIENENGEBUNDENER FAHRZEUGE**
MEASUREMENT PATH FOR DETERMINING VARIOUS PHYSICAL PARAMETERS OF RAILED VEHICLES
PARCOURS DE MESURE PERMETTANT DE DETERMINER DIFFERENTES GRANDEURS PHYSIQUES DE VEHICULES FERROVIAIRES

(30) Priorität: 13.02.2003 DE 10305470
(43) Veröffentlichungstag der Anmeldung: 09.11.2005
(73) Patentinhaber: Schenck Process GmbH, 64293 Darmstadt (DE)
(72) Erfinder: GROLL, Peter, 64297 Darmstadt (DE); STILLGER, Martin, 65611 Brechen (DE); MÜLLER, Ralph, 64291 Darmstadt (DE)
(74) Vertreter: Behrens, Helmut
(86) Internationale Anmeldenummer: PCT/EP2004/001353
(87) Internationale Veröffentlichungsnummer: WO 2004/071840

(56) Entgegenhaltungen:
- WO-A-00/23770
- WO-A-00/73118
- DE-A- 4 238 151
- DE-A- 10 031 092
- DE-A- 10 060 380
- US-B1- 6 241 196
- NAYER W ET AL: "NEUE HEISSLAEUFER- UND FESTBREMS-ORTUNGSANLAGE NACH DEM SCANNINGPRINZIP NEW HOT BOX AND BLOCKED BRAKE DETECTION SYSTEM IS BASED ON SCANNINGPRINCIPLE NOUVELLE INSTALLATION DE DETECTEURS DE BOITES CHAUDES ET D-ENRAYAGE BASEE SUR LE PRINCIPE DE BALAYAGE (SCANNING)" ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, Bd. 124, Nr. 12, Dezember 2000 (2000-12), Seiten 627-629, XP000975679 ISSN: 0941-0589

## Beschreibung

Die Erfindung betrifft eine Meßstrecke zur Erfassung unterschiedlicher physikalischer Größen schienengebundener Fahrzeuge nach dem Oberbegriff des Patentanspruchs 1.

Meßstrecken schienengebundener Fahrzeuge bestanden bisher meist aus Aufnehmern für die Erfassung einer bestimmten physikalischen Größe, deren Signale einer speziellen elektronischen Auswertevorrichtung zugeführt wurden, die daraus die gewünschten Kennwerte bildete. So sind bereits separate Meßvorrichtungen auf Gleisabschnitten bekannt, die bei der Überfahrt eines oder mehrerer Gleisfahrzeuge deren Gewicht, Radunrundheiten, Radabflachungen, Fahrgeschwindigkeiten, Anzahl der Achsen, Raddurchmesser, entgleiste Räder, Lagerüberhitzung, Bremsenüberhitzung oder eine Fahrzeugtyperkennung ermittelten. Dazu wurden Aufnehmer zur Ermittlung einer Kraft, eines Weges, einer Temperatur oder einer magnetischen Wirkung eingesetzt, die Parameter zur Bestimmung der gewünschten Kennwerte oder Ergebnisse lieferten.

Ein Gleisabschnitt, der eine Gleiswaage für überfahrende Gleisfahrzeuge darstellt, ist aus der WO 00/23770 bekannt. Dazu sind in einem Gleisabschnitt mehrere hintereinander angeordnete Wägeschwellen unter den Gleisen angeordnet. In diesen Schwellen sind Wägezellen eingelassen, auf denen die Gleise sich gegenüber den Schwellen abstützen. Diese Wägezellen erfassen als physikalische Größe die bei der Überfahrt eines Schienenfahrzeugs auf die Schienen wirkenden vertikalen Kräfte und wandeln diese in elektrische Signale um. Mit Hilfe einer elektronischen Auswertevorrichtung können aus diesen elektrischen Signalen Kennwerte errechnet werden, die z. B. der Achslast oder dem Fahrzeuggewicht entsprechen. Durch Aneinanderreihung mehrerer derartiger Wägeschwellen werden Meßstrecken gebildet, die einzelne Drehgestelle oder ganze Waggons verwiegen. Derartige Wägevorrichtungen können in ein Gleisstück nur durch spezielle Waagenbaufirmen eingebaut werden, so daß zunächst eine Zufahrtsmöglichkeit für entsprechende Einrichtungsfahrzeuge geschaffen werden muß. Da diese Gleiswaagen heute alle mit elektronischen Einrichtungen betrieben werden, müssen an dem vorgesehenen Gleisabschnitt auch Stromversorgungsleitungen und Verbindungsleitungen zu den Auswertevorrichtungen verlegt werden, deren Aufwand den der Waage häufig bei weitem übersteigt. Aus wirtschaftlichen Gründen werden deshalb derartige Meßstrecken zur Gewichtsermittlung meist nur in Nebengleisen eingebaut, wo eine derartige Infrastruktur vorhanden ist, so daß eine flächendeckende Achslastermittlung mit derartigen Meßstrecken meist nicht möglich ist.

Zur Ermittlung von Unrundheiten und Flachstellen an Schienenfahrzeugrädern ist aus der DE 44 39 342 A1 eine spezielle Meßstrecke bekannt, bei der an vier benachbarten Schwellen die Schwellenreaktionskräfte gemessen werden. Dazu sind auf dem auf der Schwelle aufliegenden Schienenfuß acht Dehnungsmeßstreifen appliziert, die zu einer Wheatstone'schen Brücke verschaltet und alle Meßstellen einer speziellen Schaltungsanordnung zur Auswertung zugeführt sind. In der auswertenden Schaltungsanordnung werden aus den elektrischen Signalen jeder Meßstelle als Kennwerte deren Radaufstandskräfte ermittelt. Aus einer bestimmten Abweichung von einem konstanten Wert ergibt sich eine Unrundheit oder eine Flachstelle, die dann anzeigbar oder signalisierbar ist. Da derartige Unrundheiten und Flachstellen insbesondere bei hohen Überfahrtgeschwindigkeiten eine Gleisstrecke stark beschädigen können, wäre es notwendig, derartige Erkennungsvorrichtungen in jede Hochgeschwindigkeitsgleisstrecke zu integrieren und jede Zugverbindung auf dieser Strecke zu überwachen, zu identifizieren und wenn nötig die Geschwindigkeit zu reduzieren oder den Zug zu stoppen. Da derartige Hochgeschwindigkeitsbereiche meist außerhalb der Bahnhöfe oder außerhalb bebauter Grundstücke verlaufen, erfordert ein derartiger Einbau zunächst einen hohen Aufwand für den Aufbau einer notwendigen Zufahrtmöglichkeit und einer Stromversorgung sowie die Anbindung an zentrale Überwachungsstützpunkte. Deshalb wurden derartige Meßstrecken bisher sehr selten eingesetzt, so daß Flachstellen und Unrundheiten in der Regel erst bei stationären Wartungsarbeiten entdeckt werden können.

Aus der DE 43 27 674 C2 ist eine Einrichtung zum Erfassen vorzugsweise schnell laufender Eisenbahnräder bekannt, mit der die auf einem Gleisabschnitt fahrenden Achsen gezählt und deren Geschwindigkeit und Fahrtrichtung gemessen wird. Dazu ist ein durch zwei Raderfassungspunkte begrenzter Gleisabschnitt mit jeweils zwei beabstandeten Raddetektoren mindestens an jedem Raderfassungspunkt versehen. Die Raddetektoren können dabei nach unterschiedlichen physikalischen Prinzipien arbeiten. Dies können sowohl mechanische Schalteinrichtungen, Wirbelstromaufnehmer oder optische Schalteinrichtungen sein. Beim Durchfahren eines Fahrzeugrades an einem der beiden Raderfassungspunkte werden durch die beiden Raddetektoren zwei nacheinander folgende elektrische Signale erzeugt, die einer für den Gleisabschnitt vorgesehenen Auswerteeinrichtung zugeführt werden. Bei der Auswertevorrichtung handelt es sich um eine programmgesteuerte Rechenanlage, in der die beiden elektrischen Schaltsignale zwischengespeichert und so ausgewertet werden, daß entsprechende Kennwerte für die Fahrtrichtung, die Überfahrgeschwindigkeit und die Anzahl der in den Gleisabschnitt ein- und ausfahrenden Achsen gebildet wird. Dabei sollen aus den in den Gleisabschnitt ein- und ausgelaufenen Achsen eine frei- oder besetzt-Meldung gebildet werden, um Unfälle mit nachfolgenden Zügen zu verhindern. Zur Sicherheit des Zugverkehrs ist es sinnvoll, derartige Achszähleinrichtungen im Abstand der notwendigen Bremswege flächendeckend nacheinander vorzusehen. Dies erfordert aber einen hohen Aufwand, da an der gesamten Gleisstrecke paarweise Aufnehmer angeordnet werden müssen und diese mit zentral überwachenden Auswertevorrichtungen zu verbinden sind. Allerdings wären auch bei einem derartigen Aufwand noch keine sicherheitsrelevanten Beschädigungen am Fahrwerk oder den Rädern der überfahrenden Züge erkennbar.

Ein Verfahren und eine Einrichtung zur Überwachung eines vorzugsweise schienengebundenen Fahrzeugs ist aus der WO 00/51868 bekannt. Dabei werden belastungsabhängige Größen am Fahrwerk eines Fahrzeugs erfaßt und daraus ort- und geschwindigkeitsabhängige Kennwerte für eine bestimmte Meßstrecke gebildet, die dann mit repräsentativen Kennwerten des Fahrzeugs im Neuzustand auf dieser Meßstrecke verglichen werden. Bei einer vorgegebenen Abweichung wird daraus eine Entgleisung oder ein Schaden am Fahrwerk abgeleitet. Dazu sind am Fahrwerk des schienengebunden Fahrzeugs Beschleunigungsaufnehmer, Relativbewegungsaufnehmer, Temperaturaufnehmer und Dehnungsmeßstreifen vorgesehen, die während der Fahrt auf einem Gleisabschnitt beispielsweise den Abstand des Fahrwerks zur Schiene, die Temperatur an den Radlagern oder Bremsen oder die Dehnung an einer Achsfederung erfassen und unter Berücksichtigung der Fahrgeschwindigkeit und der Beschaffenheit des Gleisabschnitts daraus Defekte am Fahrzeug oder eine Entgleisung errechnen. Derartige Überwachungsvorrichtungen müssen zur flächendeckenden Überwachung in jedem schienengebundenen Fahrzeug oder Zug vorgesehen werden. Dazu sind zuvor jeweils die repräsentativen Daten des gesamten Gleissystems zu erfassen und in den zugehörigen Auswertevorrichtungen einzuspeichern. Dies erfordert insbesondere bei Änderungen an den eingespeicherten Meßstrekken jeweils eine erneute Erfassung der repräsentativen Werte, um in jedem. Fall eine Abweichung erkennen zu können. Die jeweils neue Erfassung derartiger repräsentativer Werte erfordert einen hohen Aufwand, der nur bei hohen Gefährdungspotential gerechtfertigt ist. Allerdings ist mit einer derartigen Einrichtung ein Schaden an den Fahrzeugrädern auch erst erkennbar, wenn das Rad bereits entgleist ist, so daß vorherige Radreifenbrüche oder starke Unrundheiten oder Flachstellen eigentlich erst zu spät feststellbar sind.

Der Erfindung liegt deshalb die Aufgabe zugrunde, eine Meßstrecke zu schaffen, mit der verschiedene betriebs- oder sicherheitsrelevante Daten eines überfahrenden schienengebundenen Fahrzeugs für unterschiedliche Kennwerte erfaßbar sind und dies mit möglichst geringem Aufwand zur infrastrukturellen Versorgung.

Diese Aufgabe wird durch die in Patentanspruch 1 angegebene Erfindung gelöst. Weiterbildungen und vorteilhafte Ausführungsbeispiele sind in den Unteransprüchen angegeben.

Die Erfindung hat den Vorteil, daß durch die Aufnahme unterschiedlicher physikalischer Größen auf einer gemeinsamen Meßstrecke separate Infrastrukturmaßnahmen eingespart werden können. So ist für die Installation verschiedener Aufnehmersysteme auf einer Meßstrecke auch auf abgelegenen Gleisabschnitten nur eine Zufahrtsmöglichkeit, Stromversorgung und Signalübertragung notwendig. Weiterhin können durch eine gemeinsame Auswertung der unterschiedlichen Aufnehmersignale zusätzliche sicherheits- und betriebsrelevante Kennwerte ermittelt werden, die vorteilhaft nur durch die Kombination der verschiedenen Aufnehmersignale möglich sind. Dabei können auch gleiche Kennwerte aus unterschiedlichen physikalischen Größen ermittelt werden, wobei vorteilhafterweise dann nur die Aufnehmersignale mit dem geringsten Auswerteaufwand verwendbar sind.

Die Erfindung hat zusätzlich den Vorteil, daß durch die Kombination und Integration der unterschiedlichen Aufnehmersysteme innerhalb einer Meßstrecke eine Vielzahl von sicherheits- und betriebswirtschaftlich relevanten Daten sowohl des Schienenfahrzeugs als auch der Gleisstrecke erfaßt und ausgewertet werden können. Daß alle Aufnehmersysteme an den gemeinsamen Schwellen oder den Schienen eines begrenzten Gleisabschnitts vorgesehen sind, hat den Vorteil, daß der Installationsaufwand sehr gering ist und die Installationszeit nur eine kurze Unterbrechung der Fahrwege notwendig macht. Durch die gemeinsame Überwachung verschiedener sicherheitsrelevanter Kennwerte können auf vorteilhafte Weise auch frühzeitige Schäden am Schienenfahrzeug festgestellt und identifiziert werden, so daß vorbeugend Abhilfemaßnahmen einleitbar sind.

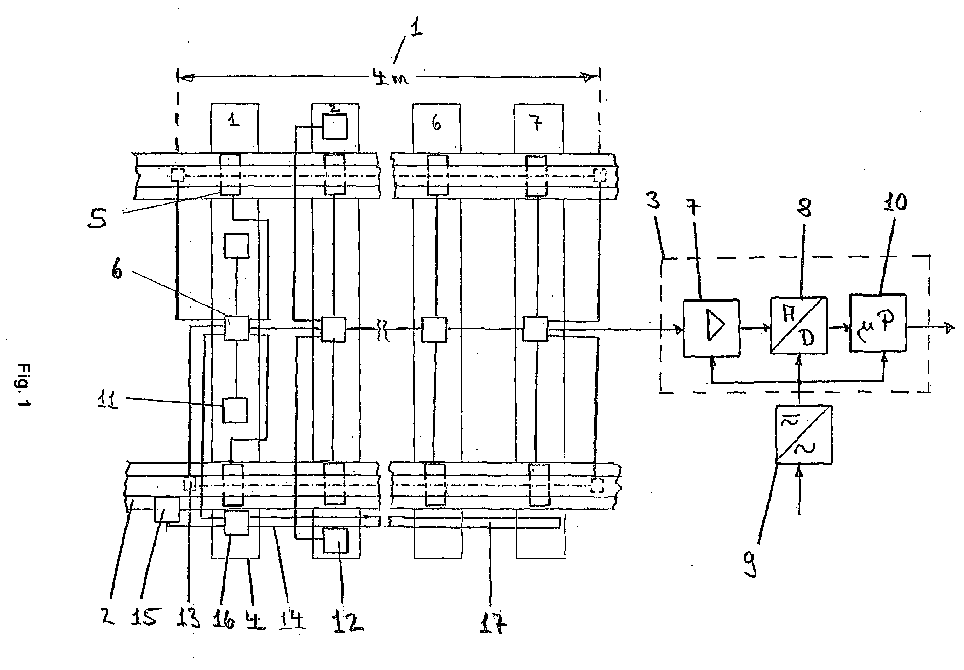

Die Erfindung wird anhand eines Ausführungsbeispiels, das in der Zeichnung dargestellt ist, näher erläutert. Die Zeichnung zeigt eine schematische Darstellung einer Draufsicht auf eine Meßstrecke 1 für schienengebundene Fahrzeuge. Die Meßstrecke 1 besteht aus einem Gleisabschnitt, auf dem an den Schienen 2 und auf den Schwellen 4, Kraftaufnehmer 5, Temperaturaufnehmer 11, 12 und Magnetfeldaufnehmer 14 angeordnet sind, die mit einer gemeinsamen Auswertevorrichtung 3 und einer gemeinsamen Stromversorgung 9 verbunden sind.

Die Meßstrecke 1 stellt ein Gleisabschnitt von vorzugsweise ca. 4 m Länge dar, der in der Regel sieben Schwellenbereiche beinhaltet. Diese Meßstrecke 1 enthält unter jeder Schiene 2 sieben Kraftaufnehmer 5, die die Schiene 2 auf den Schwellen 4 abstützen und durch die die Radaufstandskräfte eines überfahrenden Schienenfahrzeugs auf mindestens einer Radumdrehung erfaßbar sind. Die Kraftaufnehmer 5 sind vorzugsweise als Scherkraftaufnehmer ausgebildet, die in einer Aussparung unter dem Schienenkopf oder unter der gesamten Schiene 2 angeordnet sind. Dabei werden die Aufnehmer 5 kraftschlüssig mit der Schiene-2 und der Schwelle 4 verbunden. Jeder Kraftaufnehmer 5 enthält mindestens vier Dehnungsmeßstreifen, die als Wheatstone'sche Brücke geschaltet sind und mit einer Gleich- oder Trägerfrequenzspannung aus einer gemeinsamen Stromversorgungsschaltung 9 gespeist werden. Bei einer abweichenden besonderen Ausbildung können die Kraftaufnehmer 5 auch in der Schwelle 4, im Schwellenfach oder außerhalb des Schwellenfachs vorgesehen sein. Die Radaufstandskraft kann auch mit Beschleunigungsaufnehmern erfaßt und in eine Kraft umgewandelt werden.

Die Kraftaufnehmer 5 sind vorzugsweise über eine an jeder Schwelle 4 angeordnete Schalteinrichtung 6 mit einer zentralen Auswertevorrichtung 3 verbunden. Die Auswertevorrichtung 3 enthält eine Eingangsschaltung 7, in der die Signale jedes Kraftaufnehmers 5 separat oder in zusammenschaltbaren Gruppen verstärkt werden. Diese verstärkten Analogsignale werden nachfolgend in einer oder mehreren Wandlerschaltungen 8 in Digitalwerte umgewandelt. Alle elektronischen Schaltkreise in der Auswertevorrichtung 3 sind mit der zentralen Stromversorgungsschaltung 9 verbunden, die über die Auswertevorrichtung 3 auch die Kraftaufnehmer 5 der Meßstrecke 1 speist. Zur näheren Auswertung werden die digitalisierten Meßwerte aus den Kraftaufnehmern 5 einer programmgesteuerten Mikroprozessorschaltung 10 zugeführt, die in der Nähe der Meßstrecke 1 oder in einer zentralen Überwachungsstelle angeordnet ist. Die Mikroprozessorschaltung 10 der Auswertevorrichtung 3 ist bei größerem Abstand von der Meßstrecke 1 über Schnittstellenschaltungen mit der Eingangs- 7 und Wandlerschaltung 8 verbunden. Die ausgewerteten Signale können zur Weiterverarbeitung vorzugsweise über ein Bussystem auch weiteren programmgesteuerten Rechenanlagen übermittelt werden, in der die aus den Aufnehmersignalen errechneten Kennwerte anzeigbar oder signalisierbar sind.

Im Schwellenfach vor der ersten und nach der letzten Schwelle 4 der Meßstrecke 1 sind vorzugsweise in der neutralen Faser jeder Schiene 2 Schubkraftaufnehmer 13 angeordnet, die als Scherkraftaufnehmer ausgebildet sind. Diese werden in eine Bohrung kraftschlüssig mit dem Schienensteg verbunden und liefern bei der Überfahrt eines Fahrzeugrades ein Signal, das dem Kraftnebenschluß entspricht. Dieses Signal wird zur Korrektur der Kraftnebenschlußwirkung der Radaufstandskräfte und als Schienenschalter verwendet. Die vier Schubkraftaufnehmer 13 sind ebenfalls über die gemeinsamen Schalteinrichtungen 6 mit der gemeinsamen Auswerte- 3 und Stromversorgungsvorrichtung 9 verbunden. Diese Schubkraftaufnehmer 13 enthalten ebenfalls separate Eingangsschaltkreise und werden mit einer Gleich- oder Trägerfrequenzspannung gespeist. Die digitalisierten Schubkraftaufnehmersignale werden dann ebenfalls der gemeinsamen Mikroprozessorschaltung 10 zugeführt und programmgesteuert ausgewertet.

Weiterhin enthält die Meßstrecke 1 in einem gemeinsamen Bereich auf einer der Schwellen 4 oder auf mehreren Schwellen 4 Temperaturaufnehmer 11, 12. Dabei sind mindestens zwischen den Schienen 2 ein oder zwei Temperaturaufnehmer 11 angeordnet, die die von den Scheibenbremsen eines Eisenbahnwaggons temperaturabhängige Infrarotstrahlung erfassen. Die Temperaturaufnehmer 11 können aber auch in den Schwellen, im Schwellenfach oder außerhalb des Schwellenfachs in einem gemeinsamen Gleisabschnitt angeordnet sein. Die Aufnehmer 11 sind mit ihren Verbindungsleitungen über die Schalteinrichtung 6 auf der Schwelle 4 mit der zentralen Auswerte- 3 und Stromversorgungsschaltung 9 verbunden. Die erfaßten Temperatursignale werden ebenfalls getrennten Eingangsschaltungen 7 zugeführt, verstärkt und anschließend digitalisiert und zur weiteren Auswertung der gemeinsamen Mikroprozessorschaltung 10 übermittelt.

Zur Temperaturerfassung von Radlagern schienengebundener Fahrzeuge sind noch mindestens zwei weitere Temperaturaufnehmer 12 an den Schwellen 4 vorgesehen, die vorzugsweise an den Enden der Schwellen angeordnet sind, über die sich die Radlager bewegen. Diese Temperaturaufnehmer 12 zur Erfassung der Radlagertemperatur werden gleichfalls von der gemeinsamen Stromversorgungsschaltung 9 gespeist und der gemeinsamen Auswertevorrichtung 3 zugeführt.

An mindestens einer der beiden Schienen 2 ist zusätzlich eine Magnetfeldaufnehmervorrichtung 14 angeordnet, die in erster Linie zur Feststellung des Raddurchmessers dient. Diese Aufnehmervorrichtung 14 enthält eine Entmagnetisierungsvorrichtung 15, eine Magnetisierungsvorrichtung 16 und eine magnetostriktive Positionsaufnehmervorrichtung 17, die möglichst dicht an einer der Schienen 2 angeordnet sind. Dabei ist vorzugsweise an der Schiene 2 vor der ersten Schwelle 4 die Entmagnetisierungsvorrichtung 15 angeordnet, durch die ein vorbeifahrendes Fahrzeugrad zunächst entmagnetisiert wird, um den nachfolgenden Meßwert nicht zu verfälschen. Diese Entmagnetisierungsvorrichtung 15 arbeitet mit entmagnetisierenden Magnetfeldern, die das Fahrzeugrad als ganzes erfassen oder entlang der Schiene angeordnet sind und dabei nur den Radkranz beim Abrollen entmagnetisieren.

Vorzugsweise auf der ersten Schwelle 4 ist dann die Magnetisierungsvorrichtung 16 angebracht, durch die ein Umfangssegment eines überfahrenden ferromagnetischen Fahrzeugrades, das die Magnetisierungsvorrichtung 16 überfährt, magnetisiert wird. Dieses magnetisierte Umfangssegment trifft beim Überrollen des Fahrzeugrades an einer bestimmten Stelle wieder auf der Schiene 2 auf.

Zur Erfassung des Radumfangs ist deshalb längs der Schiene 2 in einem schlauchförmigen Körper der magnetostriktive Positionsaufnehmer 17 angeordnet, der in einem aktiven Meßbereich aus einem Meßstab besteht, der mit einem Aufnehmerkopf verbunden ist. Im Aufnehmerkopf ist ein Signalumformer vorgesehen, der aus der magnetischen Beeinflussung durch das magnetisierte Radsegment im Meßstab eine Wegmessung des Radumfangs ableitet. Der Aufnehmerkopf ist dabei vorzugsweise in einem gemeinsamen Gehäuse mit der Magnetisierungsvorrichtung 16 angeordnet, kann aber auch separat an anderer Stelle entlang der Schiene 2 vorgesehen werden. Der Raddurchmesser kann auch durch andere berührungslos arbeitende Wegaufnehmer erfaßt werden, die das Rad mit Hilfe von Laser- oder anderen Lichtstrahlen abtasten und in einen Längenmeßwert umrechnen. Auch diese Magnetfeldaufnehmervorrichtung 14 wird über die gemeinsame Schalteinrichtung 6 mit der gemeinsamen Stromversorgung 9 und Auswertevorrichtung 3 verbunden.

Durch die Kombination unterschiedlicher Aufnehmersysteme mit einer gemeinsamen Auswertung der erfaßten Signale sind auf einfache Weise mit einer derartigen Meßstrecke nicht nur betriebsrelevante Kennwerte, wie beispielsweise die Radlast, Achslastgewichte oder die Streckenbelastung, sondern gleichzeitig auch sicherheitsrelevante Kennwerte wie Lagerheißläufe, Flachstellen oder rutschende Räder erfaßbar. Da die Kraftaufnehmer 5 vorzugsweise in einer Aussparung der Schiene 2 unter dem Schienenkopf angeordnet sind, können alle Aufnehmersysteme 5; 11, 12; 14 vorteilhaft auf herkömmlichen Schwellen 4 oder an herkömmlichen Schienen 2 innerhalb eines gemeinsamen Gleisbereichs vorgesehen werden. Dabei ist es nicht entscheidend, ob die unterschiedlichen Aufnehmersysteme direkt an den Schwellen 4 oder Schienen 2 angebracht sind, sondern diese müssen nur in deren Nähe innerhalb eines begrenzten gemeinsamen Gleisabschnitts vorgesehen sein. Dadurch können gemeinsame Stromversörgungs- 9 und Auswertevorrichtungen 3 verwendet werden, so daß derartige Meßstrecken wirtschaftlich auch auf normalen Fahrstrecken oder Hochgeschwindigkeitsbereichen einsetzbar sind.

Bei der Überfahrt eines schienengebundenen Fahrzeugs über die Meßstrecke 1 werden durch die ersten beiden Kraftaufnehmer 5 auf der ersten Schwelle 4 elektrische Signale erzeugt, die der jeweiligen Radaufstandskraft in vertikaler Richtung der beiden überrollenden Fahrzeugräder proportional ist. Die Signale jedes der beiden Kraftaufnehmer 5 wird über einen eigenen Eingangskanal in der Eingangsschaltung 7 verstärkt und durch den nachfolgenden Analog-Digital-Wandler 8 in einen digitalen Wert umgewandelt, der der Mikroprozessorschaltung 11 der Auswertevorrichtung zugeführt und dort zwischengespeichert wird. Eine derartige Signalerfassung erfolgt auch durch die übrigen sechs Kraftaufnehmer 5 jeder Schiene 2, so daß nach einer Radumdrehung alle abgetasteten vertikalen Radaufstandskräfte in der Auswertevorrichtung 3 zwischengespeichert zur Verfügung stehen. Zur Verringerung des Schaltungsaufwands können aber auch mehrere Kraftaufnehmer 5 zu vergleichbaren Gruppen zusammengeschaltet und dann gruppenweise ausgewertet werden.

In der programmgesteuerten Auswertevorrichtung 3, die auch als Personalcomputer ausgebildet sein kann, wird aus den abgetasteten Radaufstandswerten ein Mittelwert berechnet, der gleich dem Kennwert des Radgewichts entspricht und durch entsprechende Multiplikation ein Kennwert des Achs- oder Waggongewichts darstellt. Bei der Überfahrt eines Drehgestells eines schienengebundenen Fahrzeugs wird aus den nacheinander oder gleichzeitig ermittelten Achslasten ein Kennwert für die Drehgestellbelastung gebildet. Zur Unterscheidung der Einzellastmessung oder der Drehgestellmessung wird zusätzlich während der Überfahrt eine Waggonerkennung durchgeführt. Dabei ist der Typ des Waggons oder anderer Schienenfahrzeuge unter anderem durch seine Achsabstände und/oder dessen Raddurchmesser bestimmbar.

Die Achsabstände werden vorzugsweise durch die Schubkraftaufnehmer 13 am Anfang und am Ende der Meßstrecke 1 ermittelt, die dann als Schienenschalter genutzt werden. Diese Schaltsignale können aber auch durch die Kraftaufnehmer 5 in der ersten und siebten Schwelle 4 erzeugt werden. Bei der Überfahrt wird aus dem Schubkraftsignal der Anstieg einer Flanke oder eines Signalmerkmals erfaßt und dessen Zeitablauf zwischen den Schubkraftaufnehmern 13 am Anfang und am Ende der Meßstrecke 1 ermittelt. Aus dem bekanntem Abstand auf der Meßstrecke 1 errechnet die Auswertevorrichtung 3 einen Kennwert für die Überfahrtgeschwindigkeit. Aus der Überfahrtgeschwindigkeit wird dann der Achsabstand der überfahrenden Fahrzeugräder errechnet und mit den in der Auswertevorrichtung 3 gespeicherten bekannten Achsabständen verglichen und daraus beispielsweise der jeweilige Waggontyp mit Einzelachsen oder Drehgestellen bestimmt. Die Waggonerkennung kann bei Meßstrecken ohne Schubkraftsensoren 13 und ohne Kraftaufnehmer 5 aber auch durch die Magnetfeldaufnehmervorrichtung 14 oder anderen berührungslos arbeitenden Raddurchmessermeßeinrichtungen festgestellt werden. Denn mit der Magnetfeldaufnehmervorrichtung 14 ist sowohl der Achsabstand als auch die Überfahrgeschwindigkeit sowie die Radgröße ermittelbar, aus dessen Kennwerten in der Auswertevorrichtung 3 der zugehörige Waggontyp ermittelbar ist.

Anhand der Waggontyperkennung und der zwischengespeicherten Achs- und Radlasten wird dann durch die Auswertevorrichtung 3 als Summe das Gesamtgewicht, das Achsgewicht und die Achslastverteilung als Kennwerte errechnet. In der Auswertevorrichtung 3 sind zusätzlich für die einzelnen.Waggontypen die maximal zulässigen Rad- und Gesamtgewichte vorgegeben, so daß bei einer ermittelten Überschreitung eines dieser Werte eine Anzeige oder eine Signalisierung erfolgt. Zur Verbesserung der Genauigkeit dieser Gewichtswerte kann in der Auswertevorrichtung noch eine Korrektur erfolgen, die durch den Kraftnebenschluß der unterbrechungsfrei im Gleiskörper vorgesehenen Meßstrecke erfolgt. Die Korrektur des Kraftnebenschluß wird durch die Signale der Schubkraftaufnehmer 13 in der Auswertevorrichtung 3 berechnet, dessen Einfluß vorher durch Kalibrierwerte ermittelt wurde.

Überraschenderweise hat sich gezeigt, daß durch die Feststellung des Waggongewichts auch eine Personenzählung der in einem Waggon oder Zug befindlichen Personen erfolgen kann. Dazu wird das Waggon- oder Zuggewicht bei einer bekannten Personenzahl ermittelt und in der Auswertevorrichtung 3 als Referenzwert gespeichert. Bei nachfolgenden regelmäßigen Überfahrten wird durch die Auswertevorrichtung 3 das jeweilige Istgewicht mit dem Referenzgewicht verglichen und aus der Abweichung die jeweils im Waggon oder Zug befindliche Personenzahl errechnet, die betriebstechnisch einen notwendigen Kennwert der Zugauslastung darstellt und so auf einfache Weise bei jeder Überfahrt erfolgen kann.

Die Waggontyperkennung kann aber auch durch abfragbare Codierdaten am jeweiligen Waggon ermittelt werden. So können auch gespeicherte Waggondaten mittels Magnetstreifen oder abfragbarer Festwertspeicher bei der Überfahrt eines Zuges berührungslos durch ein zusätzliches Aufnehmersystem auf der Meßstrecke 1 abgefragt und der Auswertevorrichtung 3 übermittelt werden.

Bei einer in einer normalen Fahrtrasse angeordneten Meßstrecke 1 wird neben den Waggon- und Zuggewichten auch das gesamte Überfahrgewicht als Summe der Einzelgewichte ermittelt, das ein Kennwert für die Gesamtbelastung der Gleisstrecke darstellt. Bei Erreichen einer vorgegebenen Höchstbelastung erfolgt durch die Auswertevorrichtung 3 eine Anzeige oder eine Signalisierung, nach der Kontroll-, Stopf- oder Unterhaltungsarbeiten der Gleisstrecke veranlaßbar sind.

Durch die Ermittlung der vertikalen Radaufstandskraft während einer gesamten Radumdrehüng auf der ca. 4 m langen Meßstrecke werden durch jeden der sieben Kraftaufnehmer 5 beim Überrollen auch Aufstandskraftunterschiede erfaßt. Dazu werden die Aufnehmersignale jedes der nacheinander überrollenden Kraftaufnehmer 5 in der Auswertevorrichtung 3 zwischengespeichert und daraus schienenweise deren Mittelwert errechnet. Bei einer vorgegebenen Abweichung eines oder mehrerer der Aufnehmersignale von dem errechneten Mittelwert liegt meist eine Flachstelle oder eine unzulässige Unrundheit des Fahrzeugrades vor, dessen Kennwert angezeigt oder dies signalisiert werden kann. Bei einer besonders starken Abweichung vom Mittelwert kann auch ein Radreifenbruch vorliegen, der als solcher als besonders hohe Abweichung sofort anzeigbar und/oder signalisierbar ist. Da das schadhafte Rad sowohl durch die Waggonerkennung als auch über die vorliegende Überfahrzeit identifizierbar ist, kann ein derartiger Zug gestoppt oder der Schaden dem jeweiligen Zugführer angezeigt werden.

Durch die Erfassung jedes einzelnen Kraftaufnehmers 5 in einem eigenen Eingangskanal ist auch vorgesehen; die Summe der Radaufstandskräfte jeder Gleisseite bei jeder Überfahrt eines Zuges zu bilden. Bei einem starken Abweichung zwischen den beiden Schienen handelt es sich in der Regel um eine entsprechende Seitenwindbelastung, die insbesondere bei hohen Zuggeschwindigkeiten ein Gefährdungspotential darstellt. Derartige Seitenwindbelastungen sind deshalb anzeigbar und können durch Mitteilung an den Zugführer zu einer Geschwindigkeitsreduzierung genutzt werden. Innerhalb der Meßstrecke kann auch ein Windgeschwindigkeitsaufnehmer vorgesehen sein, mit dessen Hilfe die ermittelten Gewichtskennwerte um den Windkraftanteil korrigierbar sind.

Durch die Schubspannungsaufnehmer 13 am Anfang und Ende der Meßstrecke wird bei der ununterbrochenen Schienenführung die in Fahrtrichtung auftretende Kraftnebenschlußwirkung ermittelt. Dazu wird in der Auswertevorrichtung 3 aus den Kraftnebenschlußsignalen und den aufgrund einer vorherigen Kalibrierung ermittelten Referenzwerten ein Korrekturkennwert gebildet, der mit den ermittelten Gewichtswerten verknüpft wird. Dadurch ist eine höhere Genauigkeit bei der Gewichtsmessung erreichbar. Die durch die Schubkraftaufnehmer 13 erfaßten Kräfte in Fahrtrichtung ergeben auch gleichzeitig einen Kennwert, der der Lagerbelastung der Schienenlagerung auf den Schwellen 4 proportional ist. Deshalb ist in der Auswertevorrichtung 3 vorgesehen, diese Lagerbelastung separat zu erfassen und anzuzeigen. Bei Hochgeschwindigkeitszügen kann deshalb ein Überschreiten der zulässigen Lager- oder Schwellenbelastung durch eine Reduzierung der Fahrgeschwindigkeit vermieden werden.

Die zwischen den Schienen 2 auf den Schwellen 4 der Meßstrecke 1 angeordneten Temperaturaufnehmer 11 sind unterhalb der Trommel- oder Scheibenbremsen der Schienenfahrzeuge angeordnet und so auf diese gerichtet, daß sie die durch Hitzeeinwirkung auftretende Strahlungswärme bzw. Infrarotstrahlung erfassen. Aus einem vorbekannten Abstand zwischen den Aufnehmern 11 und der Bremsscheibe oder -trommel und den Aufnehmersignalen wird in der Auswertevorrichtung 3 daraus ein Temperaturkennwert der Bremsscheibe oder -trommel errechnet. Da die Bremsleistung mit zunehmender Bremsscheibentemperatur stark abnimmt, sind in der Auswertevorrichtung 3 Grenzwerte vorgegeben, bei deren Überschreitung eine Überhitzung angezeigt oder signalisiert wird.

Gleichartige Temperaturaufnehmer 12 sind auch auf den beiden Endbereichen einer der Schwellen 4 der Meßstrecke 1 angeordnet, die meist unterhalb der überfahrenden Radlager vorgesehen sind. Diese Temperaturaufnehmer 12 sind so auf die Radlager gerichtet, daß sie dessen hitzebedingte Infrarotstrahlung erfassen. Aus dem vorgegebenen Abstand zu den Lagern und den ermittelten Temperatursignalen wird in der Auswertevorrichtung 3 ein Kennwert für die Lagertemperatur jedes überfahrenden Radlagers errechnet. Da überhitzte Radlager auf einen Lagerschaden hindeuten, wird die Überschreitung eines vorgegebenen Grenzwertes angezeigt oder signalisiert. Aus der zuvor durchgeführten Waggon- und Zugerkennung ist dabei das defekte Lager sowie eine überhitzte Bremse identifizierbar und kann in einem Überwachungszentrum oder beim Zugführer angezeigt werden. Mit derartigen Temperaturaufnehmern 11, 12 kann gleichzeitig auch die Umgebungstemperatur und die betriebstechnisch wichtige Schienentemperatur erfaßt und bei der Berechnung der betriebsrelevanten Kennwerte berücksichtigt oder in einem Überwachungszentrum angezeigt werden.

Durch die zusätzlich an der Meßstrecke 1 vorgesehene Magnetfeldaufnehmervorrichtung 14 wird beim Überfahren eines Fahrzeugrades auch dessen Raddurchmesser ermittelt. Dazu ist vor der ersten Schwelle 4 der Meßstrecke 1 an oder entlang mindestens einer der Schienen 2 die Entmagnetisierungsvorrichtung 15 vorgesehen, durch die eine vorhandene Restmagnetisierung des ferromagnetischen Fahrzeugrades beseitigt wird. Dabei wird vorzugsweise der Radreifen auf mindestens einer Radumdrehung an einem magnetischen Wechselfeld der Entmagnetisierungsvorrichtung 15 vorbeigeführt.

Auf der ersten Schwelle 4 ist nachfolgend eine Magnetisierungsvorrichtung 16 angeordnet, durch die ein Teilsegment des überrollenden Fahrzeugrades magnetisiert wird. Dazu läuft mindestens der Radreifen an starken Elektromagneten vorbei, der durch einen Stromimpuls kurzzeitig magnetisiert wird. Nachfolgend ist entlang der Schiene 2 mindestens in einem Bereich von 2 bis 4 m von der Magnetisierungsstelle die magnetostriktive Positionsaufnehmervorrichtung 17 vorgesehen. Beim Auftreffen des magnetisierten Radsegmentes auf der Schiene 2 entsteht in dem daneben angeordneten Meßstab aus ferromagnetischem Material eine magnetische Beeinflussung.

Gleichzeitig wird aus dem Aufnehmerkopf in regelmäßigen Zeitabständen ein kurzer Stromimpuls auf den Meßstab gegeben, der um diesen ebenfalls ein Magnetfeld erzeugt. Treffen nun die beiden Magnetfelder aufeinander, entsteht im Meßstab an der Stelle des auftreffenden Segments eine mechanische Verdrehung und Verformung (Torsion). Dadurch wird im Meßstab eine Körper-Ultraschallwelle erzeugt, die vom Entstehungsort zu beiden Enden des Meßstabes verläuft.

Die Detektion der Ultraschallwelle geschieht im Signalumformer, in dem ein Wandlersystem über dem Meßstab vorgesehen ist und aus einem ortsfesten Dauermagneten und einer induktiven Detektionsspule besteht, in der ein magnetorestriktiver Metallstreifen angeordnet ist. In dem Metallstreifen bewirkt die rücklaufende Körper-Ultraschallwelle eine Permeabilitätsänderung, die in der Detektionsspule zu einem elektrischen Antwortsignal führt. In einer elektronischen Schaltung des Aufnehmerkopfes wird aus der Laufzeit des Torsionsimpulses mit Hilfe der konstanten Ultraschallgeschwindigkeit ein Kennwert gebildet, der eine Wegmessung darstellt und dem Radumfang proportional ist.

Dieser Kennwert wird dann über eine gemeinsame Schalteinrichtung 6 der Auswertevorrichtung 3 zugeführt. Aus dem Umfangskennwert wird dann in der Auswertevorrichtung 3 der Raddurchmesser errechnet. Aus dem Raddurchmesser kann auch der Abstand zu den Bremsscheiben und den Radlagern ermittelt werden, sofern dieser nicht vorbenannt ist, der zur genauen Temperaturbestimmung an den Radlagern und den Fahrzeugbremsen notwendig ist. Aus dem Raddurchmesser ergibt sich gleichzeitig auch eine maximal zulässige Rad- oder Achsbelastung, die durch Vergleich mit den ermittelten Radaufstandswerten überprüft wird und bei dessen Überschreitung anzeigbar oder signalisierbar ist.

Über die Radgröße und den ermittelten Achsabständen kann auch eine eindeutigere Waggonerkennung in der Auswertevorrichtung 3 durchgeführt werden, sofern die zur Erkennung notwendigen Achsabstände nur geringfügige Unterschiede aufweisen. Da die Magnetfeldaufnehmervorrichtung 14 bei jedem überrollten Fahrzeugrad ein Signal erzeugt, wird sie auch zur Achszählung eingesetzt. Dazu werden die Signale wie bei einem Schienenschalter beim Überfahren eines Zugverbandes in der Auswertevorrichtung 3 aufsummiert und angezeigt. Bei vorbekannter Achszahl eines Zugverbandes kann damit durch eine Vergleichsberechnung in der Auswertevorrichtung 3 eine Entgleisung einer Achse oder eines Drehkranzes oder der Verlust eines oder mehrerer Waggons festgestellt und signalisiert werden.

Bei der Anordnung mehrerer in Abstand hintereinander angeordneter Meßstrecken 1 kann damit auch eine Überwachung der in dem Gleisabschnitt einfahrenden und ausfahrenden Achsen vorgenommen werden. Weiterhin werden mit dem Magnetfeldaufnehmer 14 auch rutschende Fahrzeugräder ermittelt. Dazu wird in die Auswertevorrichtung 3 ein Grenzwert für den Radumfang eingegeben, der jeden vorkommenden Raddurchmesser überschreitet. Wird in diesem Abstand das magnetisierte Radsegment nicht erfaßt, so stellt das einen Kennwert für ein rutschendes Fahrzeugrad dar und kann als solches angezeigt oder signalisiert werden. Ein rutschendes Fahrzeugrad kann aber auch durch einen Vergleich der Durchmesser bzw. der Radumfänge aller Räder eines Waggons ermittelt werden. Dazu wird in der Auswertevorrichtung 3 bei einer vorgegebenen Abweichung vom Mittelwert aller Raddurchmesser eines Waggons ein rutschendes Rad festgestellt und dieses angezeigt oder signalisiert.

Derartige Meßstrecken 1 können in regelmäßigem Abstand in das gesamte Streckennetz integriert werden und ermöglichen so eine genaue und umfassende Überwachung und Betriebsdatenerfassung der Gleisstrecke als auch der darauf verkehrenden Fahrzeuge. Insbesondere ist aus der Kombination von kraftaufnehmenden und temperaturaufnehmenden Aufnehmersystemen 5, 11, 12 auf einer Meßstrecke 1 eine Überwachungsmöglichkeit gegeben, die die Sicherheit von Gleisstrecken erheblich erhöhen kann. Gleichzeitig können dadurch auch betriebstechnische Daten erfaßt werden, mit dessen Hilfe eine wirtschaftlichere Belastung des Betriebsablaufs auf der Gleisstrecke möglich ist. Insbesondere kann dadurch der Betriebsablauf so gesteuert werden, daß weniger Schäden auftreten und der Unterhaltungsaufwand geringer wird. Dabei bietet insbesondere auch die Kombination mit einer Magnetfeldaufnehmervorrichtung 14 den Vorteil, daß damit auf einfache Weise sehr genaue Daten zur Zugerkennung, Achs- und Geschwindigkeitsermittlung sowie der höchstzulässigen Achsbelastung ermittelbar sind, die die Auswertemöglichkeit der betriebs- und sicherheitstechnischen Daten in ihrer Gesamtheit und in ihrer Geschwindigkeit erhöht.

Die Meßstrecke kann zur Erfassung mehrerer unterschiedlicher physikalischer Größen aus einer beliebigen Kombination von Aufnehmersystemen bestehen, sofern diese auf einfache und kostengünstige Art die gewünschten Kennwerte liefern. So sind insbesondere bei Hochgeschwindigkeitsstrecken Kombinationen von Kraft- mit Temperaturaufnehmersystemen vorteilhaft, weil damit auf einfache Weise die sicherheitsrelevanten Kennwerte von Unrundheit, Radreifenbrüchen, Bremsüberhitzungen und Achsheißläufern ermittelbar sind. Hingegen ist zur Beurteilung des Güterverkehrs auf einer Gleisstrecke insbesondere die Kombination aus Kraft-, Temperatur- und Raddurchmesser messenden Aufnehmersystemen vorteilhaft. Denn insbesondere bei der Beurteilung der Achslastverteilung und der Überschreitung der maximal zulässigen Radlast, sowie der Gesamtlast kann eine Überlastung der Gleisstrecke sowie eine Überlastung der Gleisfahrzeuge verhindert werden. Es ist aber auch lediglich eine Kombination aus Temperatur- und Raddurchmesser erkennenden Aufnehmersystemen möglich, durch die Kennwerte der Hitzebelastung der Bremsen und Lager sowie die Überschreitung der maximal zulässigen Geschwindigkeit und rutschende Fahrzeugräder ermittelbar sind.

## Patentansprüche

1. Meßstrecke zur Erfassung mehrerer verschiedener physikalischer Größen schienengebundener Fahrzeuge durch unterschiedliche Aufnehmersysteme, insbesondere solche zur Kraftmessung, Temperaturmessung und/oder zur Wegmessung, die zur Bildung von Kennwerten aus den Aufnehmersignalen mit einer gemeinsamen Auswertevorrichtung (3) verbunden sind, **dadurch gekennzeichnet, daß** die unterschiedlichen Aufnehmersysteme (5, 11, 12, 14) innerhalb eines gemeinsamen Gleisabschnitts angeordnet sind, wobei eine Kombination von mindestens zwei unterschiedlichen Aufnehmersystemen zur Erfassung verschiedener physikalischer Größen vorgesehen ist.

2. Meßstrecke nach Anspruch 1, **dadurch gekennzeichnet, daß** die unterschiedlichen Aufnehmersysteme (5, 11, 12, 14) an gemeinsamen Schwellen (4) und/oder Schienen (2) angeordnet sind.

3. Meßstrecke nach Anspruch 1 oder 2, **dadurch gekennzeichnet, daß** eine Kombination von unterschiedlichen Aufnehmersystemen (5, 11, 12, 14) mindestens eines zur Kraft- und eines zur Temperaturmessung oder mindestens eines zur Kraft-, eines zur Temperatur- und eines zur Wegmessung enthält.

4. Meßstrecke nach einem der vorhergehenden Ansprüche, **dadurch gekennzeichnet, daß** zwischen den Schienen (2) und Schwellen (4) Kraftaufnehmer (5) vorgesehen sind, durch die die vertikalen Radaufstandskräfte von stehenden und überfahrenden Fahrzeugrädern erfaßbar sind, aus denen die Auswertevorrichtung (3) verschiedene belastungsabhängige Kennwerte ermittelt.

5. Meßstrecke nach einem der vorhergehenden Ansprüche, **dadurch gekennzeichnet, daß** am Anfang und am Ende der Meßstrecke (1) als Kraftaufnehmer Schubkraftaufnehmer (13) vorzugsweise in der neutralen Faser der Schiene (2) vorgesehen sind, aus dessen Signalen die Auswertevorrichtung (3) Kennwerte zur Korrektur der Kraftnebenschlußwirkung ermittelt.

6. Meßstrecke nach einem der vorhergehenden Ansprüche, **dadurch gekennzeichnet, daß** aus den Signalen mindestens eines oder mehrerer Schubkraftsensoren (13) und/oder Kraftaufnehmer die Auswertevorrichtung (3) Kennwerte für die Anzahl der überfahrenden Achsen und/oder der Überfahrgeschwindigkeit errechnet.

7. Meßstrecke nach einem der vorhergehenden Ansprüche, **dadurch gekennzeichnet, daß** innerhalb des Gleisabschnitts der Meßstrecke (1) ein Aufnehmersystem (11, 12) zur Temperaturerfassung vorgesehen ist, aus dessen Signalen die Auswertevorrichtung (3) Kennwerte für eine thermische Belastung von vorgegebenen Teilen überfahrender Fahrzeuge, von Schienenteilen und/oder Umgebungsbereichen ermittelt.

8. Meßstrecke nach Anspruch 7, **dadurch gekennzeichnet, daß** das Aufnehmersystem zur Temperaturerfassung aus mindestens einem Temperaturaufnehmer (11, 12) besteht, der auf einer der Schwellen (4) innerhalb des Gleisabschnitts der Meßstrecke (1) angeordnet ist und der die thermische Belastung an den Fahrzeugbremsen und/oder den Radlagern durch Umwandlung der Infrarotstrahlung in elektrische Signale erfaßt.

9. Meßstrecke nach einem der vorhergehenden Ansprüche, **dadurch gekennzeichnet, daß** innerhalb des Gleisabschnitts der Meßstrecke (1) ein Aufnehmersystem zur Wegmessung mit einer Magnetfelderfassungsvorrichtung (14) vorgesehen ist, das bei der Überfahrt eines ferromagnetischen Fahrzeugrades dessen Umfangsstrecke erfaßt, aus der die Auswertevorrichtung (3) mindestens einen Kennwert für den Raddurchmesser und/oder Anzahl der überfahrenden Achsen ermittelt.

10. Meßstrecke nach Anspruch 9, **dadurch gekennzeichnet, daß** die Magnetfelderfassungsvorrichtung (14) gleichzeitig die Zeit der Umfangsabrollung auf der Schiene (2) erfaßt, aus der die Auswertevorrichtung (3) einen Kennwert für die Überfahrtgeschwindigkeit ermittelt.

11. Meßstrecke nach Anspruch 9 oder 10, **dadurch gekennzeichnet, daß** die Magnetfeldaufnehmervorrichtung (14) eine Entmagnetisierungsvorrichtung (15), eine Magnetisierungsvorrichtung (16) zur Magnetisierung eines überfahrenden Radsegmentes und einen magnetostriktiven Positionsaufnehmer (17) zur Erfassung des auftreffenden magnetisierten Radsegments auf der Schiene (2) enthält, die entlang mindestens einer Schiene (2) angeordnet sind.

12. Meßstrecke nach einem der vorhergehenden Ansprüche, **dadurch gekennzeichnet, daß** die verschiedenen Aufnehmersysteme (5, 11, 12, 14) mit einer gemeinsamen Auswertevorrichtung (3) verbunden sind, die aus den verschiedenen Aufnehmersignalen gleicher oder verschiedener Aufnehmersysteme (5, 11, 12, 14) unterschiedliche Kennwerte ermittelt, die sicherheits- und/oder betriebsrelevante Daten der überfahrenden Gleisfahrzeuge und/oder einem Abschnitt einer vorgegebenen Gleisstrecke darstellen.

13. Meßstrecke nach einem der vorhergehenden Ansprüche, **dadurch gekennzeichnet, daß** zur Speisung der verschiedenen Aufnehmersysteme (5, 11, 12, 14) und der Auswertevorrichtung (3) oder zumindest von Teilen einer Auswertevorrichtung eine gemeinsame Stromversorgungsvorrichtung (9) vorgesehen ist.

14. Meßstrecke nach einem der vorhergehenden Ansprüche, **dadurch gekennzeichnet, daß** die Auswertevorrichtung (3) eine elektrische Eingangsschaltung (7), eine Analog-Digital-Wandlerschaltung (8) und eine programmgesteuerte Mikroprozessorschaltung (10) enthält, die so ausgebildet ist, daß sie aus den verschiedenen Aufnehmersignalen durch Rechenregeln die erfaßten Meßwerte so miteinander verknüpft, daß daraus vorgesehene Kennwerte errechenbar sind.

15. Meßstrecke nach einem der vorhergehenden Ansprüche, **dadurch gekennzeichnet, daß** die Auswerteeinrichtung (3) so ausgebildet ist, daß sie mindestens während der Überfahrt eines oder mehrerer Zugfahrzeuge in bestimmten Zeitabschnitten die verschiedenen Aufnehmersysteme abtastet, digitalisiert, zwischenspeichert und mittels vorgespeicherter vorgegebener Parameter oder Kennwerte so über Rechenregeln miteinander verknüpft, daß deren Ergebnisse die gewünschten betriebs- und sicherheitsrelevanten Daten des Fahrzeugs oder der Gleisstrecke bilden.

16. Meßstrecke nach einem der vorhergehenden Ansprüche, **dadurch gekennzeichnet, daß** in der Auswertevorrichtung (3) als vorgespeicherte Parameter oder Kennwerte Grenzwerte vorgegeben sind, die mit ermittelten gleichartigen Meßwerten und/oder Kennwerten verglichen werden und bei Überschreiten der Grenzkennwerte eine Anzeige und/oder Signalisierung erfolgt.

17. Meßstrecke nach einem der vorhergehenden Ansprüche, **dadurch gekennzeichnet, daß** diese aus mehreren gleichartigen Meßstrecken (1) besteht, die in unterschiedlichen Gleisabschnitten angeordnet sind und über gemeinsame Auswerte- und/oder Anzeigevorrichtungen verfügt.

## Claims

1. Measurement path for detecting a plurality of different physical variables of rail-bound vehicles, by means of different sensor systems, in particular those for force measurement, temperature measurement and/or displacement measurement, which are connected to a common evaluation device (3) for the formation of characteristic values from the sensor signals, **characterised in that** the different sensor systems (5, 11, 12, 14) are arranged inside a common track section, a combination of at least two different sensor systems being provided to detect various physical parameters.

2. Measurement path according to claim 1, **characterised in that** the different sensor systems (5, 11, 12, 14) are arranged on common sleepers (4) and/or rails (2).

3. Measurement path according to claim 1 or 2, **characterised in that** a combination of different sensor systems (5, 11, 12, 14) contains at least one for force measurement and one for temperature measurement or at least one for force measurement, one for temperature measurement and one for displacement measurement.

4. Measurement path according to any one of the preceding claims, **characterised in that** force sensors (5) are provided between the rails (2) and sleepers (4), by means of which the vertical wheel contact forces of standing and passing vehicle wheels can be detected, from which the evaluation device (3) determines various load-dependent characteristic values.

5. Measurement path according to any one of the preceding claims, **characterised in that** transverse force sensors (13) are provided at the beginning and at the end of the measurement path (1) as force sensors, preferably in the neutral phase of the rail (2), from the signals of which the evaluation device (3) determines characteristic values to correct the force shunt effect.

6. Measurement path according to any one of the preceding claims, **characterised in that** the evaluation device (3) calculates characteristic values for the number of passing axles and/or the passing speed from the signals of at least one or more transverse force sensors (13) and/or force detectors.

7. Measurement path according to any one of the preceding claims, **characterised in that** a sensor system (11, 12) is provided for temperature detection inside the track section of the measurement path (1), from the signals of which the evaluation device (3) determines characteristic values for a thermal loading of predetermined parts of passing vehicles, of rail parts and/or surrounding regions.

8. Measurement path according to claim 7, **characterised in that** the sensor system for temperature detection consists of at least one temperature sensor (11, 12), which is arranged on one of the sleepers (4) inside the track section of the measurement path (1) and which detects the thermal loading at the vehicle brakes and/or the wheel bearings by converting the infrared radiation into electrical signals.

9. Measurement path according to any one of the preceding claims, **characterised in that** a sensor system for displacement measurement with a magnetic field detection device (14) is provided inside the track section of the measurement path (1), which sensor system, during the passing of a ferromagnetic vehicle wheel, detects the circumferential extent thereof, from which the evaluation device (3) determines at least one characteristic value for the wheel diameter and/or the number of the passing axles.

10. Measurement path according to claim 9, **characterised in that** the magnetic field detection device (14) simultaneously detects the time of the circumferential rolling on the rail (2), from which the evaluation device (3) determines a characteristic value for the passing speed.

11. Measurement path according to claim 9 or 10, **characterised in that** the magnetic field sensor device (14) contains a demagnetisation device (15), a magnetisation device (16) for magnetising a passing wheel segment and a magnetostrictive position sensor (17) for detecting the impinging magnetised wheel segment on the rail (2), which are arranged along at least one rail (2).

12. Measurement path according to any one of the preceding claims, **characterised in that** the different sensor systems (5, 11, 12, 14) are connected to a common evaluation device (3), which, from the various sensor signals of the same or different sensor systems (5, 11, 12, 14), determines different characteristic values, which are data relevant to safety and/or operation of the passing track vehicles and/or a section of a predetermined track line.

13. Measurement path according to any one of the preceding claims, **characterised in that** a common current supply device (9) is provided to feed the different sensor systems (5, 11, 12, 14) and the evaluation device (3) or at least parts of an evaluation device.

14. Measurement path according to any one of the preceding claims, **characterised in that** the evaluation device (3) contains an electric input circuit (7), an analogue/digital converter circuit (8) and a programme-controlled microprocessor circuit (10), which is configured in such a way that, from the various sensor signals, it links the measured values detected with one another, by calculation rules, in such a way that provided characteristics values can be calculated therefrom.

15. Measurement path according to any one of the preceding claims, **characterised in that** the evaluation device (3) is configured in such a way that at least during the passing of one or more train vehicles, at specific time intervals, it samples the different sensor systems, digitalises them, temporarily stores and links them with one another by means of prestored, predetermined parameters or characteristic values by means of calculation rules in such a way that their results form the desired data relevant to operation and safety of the vehicle or the track line.

16. Measurement path according to any one of the preceding claims, **characterised in that** limit values are predetermined in the evaluation device (3), as prestored parameters or characteristic values and are compared with determined similar measured values and/or characteristic values and there occurs a display and/or signalling when the limit characteristic values are exceeded.

17. Measurement path according to any one of the preceding claims, **characterised in that** it consists of a plurality of similar measurement paths (1), which are arranged in different track sections and have common evaluation and/or display devices.

## Revendications

1. Section de mesure pour déterminer plusieurs grandeurs physiques différentes de véhicules ferroviaires par différents systèmes de capteurs, notamment ceux qui sont prévus pour la mesure de force, la mesure de la température et/ou la mesure de distance, qui pour la création de valeurs caractéristiques à partir des signaux des capteurs sont reliés à un dispositif d'évaluation (3) commun, **caractérisée en ce que** les différents systèmes de capteurs (5, 11, 12, 14) sont disposés à l'intérieur d'un tronçon de voie commun, une association d'au moins deux systèmes de capteurs différents étant prévue pour la détermination de différentes grandeurs physiques.

2. Section de mesure selon la revendication 1, **caractérisée en ce que** les différents systèmes de capteurs (5, 11, 12, 14) sont disposés sur des traverses (4) et /ou sur des rails (2) communs.

3. Section de mesure selon la revendication 1 ou 2, **caractérisée en ce qu'**une association de différents systèmes de capteurs (5, 11, 12, 14) en contient au moins un pour la mesure de force et un pour la mesure de distance ou au moins un pour la mesure de force, un pour la mesure de température et un pour la mesure de distance.

4. Section de mesure selon l'une quelconque des revendications précédentes, **caractérisée en ce qu'**entre les rails (2) et les traverses (4), on a prévu des capteurs de force (5) par lesquels les forces verticales de contact au sol des roues de véhicules à l'arrêt ou qui passent sont captées, à partir desquelles le dispositif d'évaluation (3) détermine différentes valeurs caractéristiques dépendant de la charge.

5. Section de mesure selon l'une quelconque des revendications précédentes, **caractérisée en ce qu'**au début et à la fin de la section de mesure (1), on a prévu en tant que capteurs de force des capteurs de poussée (13), de préférence dans la fibre neutre du rail (2), à partir des signaux desquels le dispositif d'évaluation (3) détermine des valeurs caractéristiques pour la correction de l'effet de dérivation des forces.

6. Section de mesure selon l'une quelconque des revendications précédentes, **caractérisée en ce qu'**à partir des signaux d'au moins un ou de plusieurs capteurs de poussée (13) et/ou capteurs de force, le dispositif d'évaluation (3) calcule des valeurs caractéristiques du nombre d'essieux qui passent et/ou de la vitesse de passage.

7. Section de mesure selon l'une quelconque des revendications précédentes, **caractérisée en ce qu'**à l'intérieur du tronçon de voie de la section de mesure (1), on a prévu un système de capteurs (11, 12) pour la détermination de la température, à partir des signaux duquel le dispositif d'évaluation (3) détermine des valeurs caractéristiques pour une charge thermique de parties prédéfinies de véhicules qui passent, de parties de rails et/ou de zones environnantes.

8. Section de mesure selon la revendication 7, **caractérisée en ce que** le système de capteurs pour l'enregistrement de température est composé d'au moins un capteur de température (11, 12) qui est disposé sur l'une des traverses (4) à l'intérieur du tronçon de voie de la section de mesure (1) et qui capte la charge thermique sur les freins du véhicule et/ou sur les paliers du véhicule, par transformation du rayonnement infrarouge en signaux électriques.

9. Section de mesure selon l'une quelconque des revendications précédentes, **caractérisée en ce qu'**à l'intérieur du tronçon de voie de la section de mesure (1), on a prévu un système de capteurs pour la mesure de la distance, avec un dispositif de détermination des champs magnétiques (14), qui lors du passage d'une roue de véhicule ferromagnétique détecte son trajet périphérique à partir duquel le dispositif d'évaluation (3) détermine au moins une valeur caractéristique du diamètre de la roue et/ou le nombre d'essieux qui passent.

10. Section de mesure selon la revendication 9, **caractérisée en ce que** le dispositif d'enregistrement des champs magnétiques (14) détecte simultanément le temps du roulement périphérique sur le rail (2), à partir duquel le dispositif d'évaluation (3) détermine une valeur caractéristique pour la vitesse de passage.

11. Section de mesure selon la revendication 9 ou 10, **caractérisée en ce que** le dispositif d'enregistrement des champs magnétiques (14) contient un dispositif de démagnétisation (15), un dispositif de magnétisation (16) pour magnétiser un segment de roue qui passe et un enregistreur de position magnétostrictif, (17) pour la détection du segment de roue magnétisé incident sur le rail (2), qui est disposé le long d'au moins un rail (2).

12. Section de mesure selon l'une quelconque des revendications précédentes, **caractérisée en ce que** les différents systèmes de capteurs (5, 11, 12, 14) seront reliés à un dispositif d'évaluation commun (3), qui à partir des différents signaux des capteurs d'un même ou de différents systèmes de capteurs (5, 11, 12, 14) détermine différentes valeurs caractéristiques, qui représentent des informations déterminantes en matière de sécurité et/ou d'exploitation du véhicule ferroviaire qui passe et/ou d'un tronçon d'un trajet de voie prédéfini.

13. Section de mesure selon l'une quelconque des revendications précédentes, **caractérisée en ce que** pour l'alimentation des différents systèmes de capteurs (5, 11, 12, 14) et du dispositif d'évaluation (3) ou d'au moins des parties d'un dispositif d'évaluation, il est prévu un dispositif commun d'alimentation électrique (9).

14. Section de mesure selon l'une quelconque des revendications précédentes, **caractérisé en ce que** le dispositif d'évaluation (3) contient un circuit électrique d'entrée (7), un circuit de transformation analogique/numérique (8) et un circuit de microprocesseur à programme commandé (10), qui est conçu de façon telle, que par des règles de calcul, il met en relation les valeurs de mesures enregistrées à partir des signaux des différents capteurs, de façon que des valeurs caractéristiques prévues puissent être calculées à partir de ces dernières.

15. Section de mesure selon l'une quelconque des revendications précédentes, **caractérisée en ce que** le dispositif d'évaluation (3) est conçu de façon à ce qu'au moins lors du passage d'un ou de plusieurs véhicules ferroviaires, il balaye à intervalles de temps déterminés les différents systèmes de capteurs, les numérise, procède à leur stockage intermédiaire et au moyen de paramètres prédéfinis ou valeurs caractéristiques stockés en mémoire, il les met en relation par des règles de calcul, de façon que leurs résultats forment les données déterminantes en matière d'exploitation et de sécurité du véhicule ou du tronçon de voie.

16. Section de mesure selon l'une quelconque des revendications précédentes, **caractérisée en ce que** dans le dispositif dévaluation (3), des valeurs limites prédéfinies en tant que paramètres ou valeurs caractéristiques stockés en mémoire sont prédéterminées et sont comparées avec des valeurs mesurées et/ou avec des valeurs caractéristiques déterminées de même type et **en ce que** lors du dépassement des valeurs caractéristiques limites, un affichage et/ou une signalisation est déclenché.

17. Section de mesure selon l'une quelconque des revendications précédentes, **caractérisée en ce qu'**elle est constituée de plusieurs sections de mesure de même type (1), qui sont disposées en différents tronçons de voie et qui disposent de dispositifs d'évaluation et/ou d'affichage communs.
